# FASCICULE DE BREVET EUROPEEN

(11) **EP 2 694 179 B1**
(45) Date de publication et mention de la délivrance du brevet: **21.07.2021**
(21) Numéro de dépôt: 12722747.8
(22) Date de dépôt: 06.04.2012
(51) Int. Cl.: B01D 11/02, C11B 9/00, C11B 9/02, A23L 27/10

(54) **PROCÉDÉ D'EXTRACTION D'UN EXTRAIT ODORANT PAR UN SOLVANT ALTERNATIF AUX SOLVANTS CONVENTIONNELS**
VERFAHREN ZUR EXTRAKTION EINES DUFTEXTRAKTS MIT EINEM GEGENÜBER HERKÖMMLICHEN LÖSUNGMSITTELN ALTERNATIVEN LÖSUNGSMITTELS
PROCESS FOR EXTRAKTING AN ODORANT EXTRACT USING AN ALTERNATIVE SOLVENT COMPARED TO CONVENTIONEL SOLVENTS

(30) Priorité: 08.04.2011 FR 1101085
(43) Date de publication de la demande: 12.02.2014
(73) Titulaire: Charabot, 06131 Grasse (FR)
(72) Inventeur: LAVOINE-HANNEGUELLE, Sophie, 06370 Mouans Sartoux (FR)
(74) Mandataire: Macquet, Christophe
(86) Numéro de dépôt international: PCT/FR2012/000132
(87) Numéro de publication internationale: WO 2012/136908

(56) Documents cités:
- EP-A1- 0 616 821
- EP-A1- 1 649 926
- CN-A- 102 002 430
- FR-A1- 2 855 069
- GB-A- 2 360 470
- US-A- 5 942 597

## Description

L'invention concerne un procédé d'extraction d'un extrait odorant à partir d'une matière première organique contenant des composés odorants par un solvant alternatif aux solvants traditionnels. L'invention concerne aussi les extraits odorants ainsi obtenus et leurs utilisations.

Il est généralement connu que les extraits naturels à destination des arômes et parfums sont des substances complexes, appelées d'ailleurs « Substances Naturelles Complexes » dont les propriétés organoleptiques sont directement liées, outre à la qualité des matières premières dont elles sont issues, au procédé de fabrication.

Les quantités de parfums et d'arômes dans les plantes sont faibles, et la nature volatile, voire fragile thermiquement, des molécules constituants ces arômes et parfums est notoire.

Pour qu'une substance possède des propriétés odorantes, il faut qu'elle ait un poids moléculaire modéré, une polarité faible, une certaine solubilité dans l'eau, une pression de vapeur et un caractère lipophile élevés. En revanche, il n'est pas nécessaire qu'elle possède de groupes fonctionnels particuliers ou qu'elle soit réactive chimiquement (Meierhenrich et al., L'actualité chimique, août-septembre 2005, n°289 p.29-40).

Aussi, la préparation de tels composés de parfums, de fragrances ou d'arômes à partir de sources naturelles n'est pas chose facile, ni à réaliser, ni à reproduire avec régularité, et peut s'avérer très coûteuse.

De tels composés sont, par exemple, isolés par extraction par entraînement à la vapeur d'eau. Ce procédé dénature cependant certains des composants odorants, et les extraits obtenus ne sont pas exploitables en termes de qualité et/ou de rendement.

Outre la vapeur d'eau très utilisée en parfumerie dans l'extraction des végétaux, des solvants organiques ont été requis pour des extraits parfumés ou aromatiques.

Après le vin, puis les huiles grasses, les graisses solides (suifs) ont été utilisées avec l'enfleurage. Ces huiles solides, saturées par les émanations des fleurs, pouvaient être reprises à l'alcool éthylique pour obtenir un concentré de pommade.

Ces méthodes très consommatrices en main d'oeuvre ont été progressivement abandonnées au profit de l'extraction directe par des solvants volatils.

Les procédés d'extraction par un solvant volatil d'un composé ou d'une composition à partir d'une matière première végétale sont également bien connus. L'extraction par des solvants volatils consiste à dissoudre la matière odorante du végétal dans un solvant que l'on fait ensuite évaporer.

Les végétaux sont placés dans des extracteurs et soumis à des lavages successifs aux solvants qui se chargent ainsi en molécules odorantes, cires, pigments. Après décantation et filtration, le solvant est évaporé afin d'obtenir une pâte fortement odorante appelée plus particulièrement concrète pour les fleurs et feuilles fraiches et résinoïde pour la matière dérivée du traitement des plantes sèches (racines, mousses...). La concrète peut donner naissance à une essence pure appelée absolue après une série de lavages à l'alcool et de glaçages.

Cette technique d'extraction par un solvant volatil était déjà communément pratiquée dans la première moitié du 20ème siècle avec de l'éther de pétrole, du benzène, et utilise classiquement de nos jours des solvants comme l'hexane, le cyclohexane, le chlorure de méthylène, l'acétate d'éthyle, l'isopropanol, l'acétone, le méthanol ou l'éthanol.

Toutefois, les solvants miscibles à l'eau tels l'isopropanol, l'acétone, le méthanol ou l'éthanol ne sont pas utilisés en extraction classique sur les produits humides car la teneur en eau de la charge entraine une perte d'arôme préjudiciable à la finition (entrainement de l'eau concentrée sous forme de vapeur qui désodorise partiellement ou complètement l'extrait).

On connaît par exemple le document US7576049 qui divulgue l'utilisation d'un ester volatil tel que l'acétate d'éthyle pour l'extraction de composés aromatiques à partir de matériel végétal. Ce document décrit notamment des temps d'extraction très courts, de 15 secondes à une dizaine de minutes, afin de ne pas extraire des matières qui pourraient être incompatibles en mélange avec d'autres composés aromatiques, telles que certaines huiles essentielles.

Toutefois, il est notoire dans la profession que l'acétate d'éthyle utilisé en tant que solvant d'extraction pur livre des produits aux notes acides, acétiques (vinaigrées) préjudiciables à la senteur, et pouvant abîmer les installations industrielles (corrosion, joints, etc).

Ainsi, les caractéristiques organoleptiques ne sont pas optimales, l'acétate d'éthyle ayant tendance à partiellement s'hydrolyser en acide acétique durant le cycle d'extraction.

Les solvants actuellement utilisés pour la fabrication des concrètes sont donc les plus apolaires, basés sur l'hexane ou le cyclohexane, ou des mélanges les contenant en forte proportion, quelque fois encore sur le dichlorométhane.

Toutefois, considérant la toxicité d'un solvant pétrolier tel que l'hexane, il s'avère particulièrement dangereux pour les manipulateurs, de part ses vapeurs toxiques (il est très volatil) et requiert des précautions afin d'éviter tout contact du produit avec la peau lors de son utilisation. De plus, le fait d'avoir à requérir à un solvant pétrolier tel que l'hexane, ou le cyclohexane, est contraire aux principes de la chimie verte.

De surcroît, des solvants apolaires tels que le chlorure de méthylène ou le benzène sont encore plus dangereux.

De plus, les coupes pétrolières, que sont les hexanes (divers isomères), ne sont jamais parfaitement pures, et du fait des faibles rendements de la plupart des concrètes végétales, les extraits concentrés obtenus sont plus ou moins souillés de molécules, traces, aux notes alliacées/grasses selon la pureté du solvant utilisé et la puissance intrinsèque de l'extrait végétal de départ.

A cet effet, la composition et l'odeur des extraits obtenus sont sensiblement différentes de la matière première.

D'une manière générale, il existe une réelle demande quant à substituer les solvants traditionnels et notamment les solvants pétroliers, par des solvants non toxiques présentant une volatilité suffisante et de bonnes propriétés d'extraction en termes de qualité et de rendement.

L'extraction au CO₂ supercritique peut constituer une alternative intéressante à l'usage de l'hexane. Cependant, elle est très complexe à mettre en œuvre en pratique car elle demande des équipements spéciaux, résistants à de fortes pressions. Les investissements entrainent des coûts élevés sur les produits obtenus. Elle donne d'excellents résultats en terme organoleptique mais les produits sont généralement des extraits à haute valeur ajoutée. L'extraction au CO₂ supercritique ne constitue donc pas une bonne alternative de substitution aux solvants traditionnels dans les équipements industriels standards existants.

On connaît également le document EP0616821 qui divulgue l'utilisation de solvants fluorocarbonés non chlorés.

On connaît plus particulièrement le document WO02/36232 qui divulgue l'utilisation d'un solvant d'extraction comprenant de l'heptafluoropropane.

Ces deux documents décrivent notamment l'avantage d'utiliser de tels solvants par comparaison avec les solvants classiques tel que l'hexane en ce qu'ils présentent des points d'ébullition inférieurs. D'après ces documents, l'évaporation du solvant à une température supérieure à 60°C conduit à chauffer l'extrait à des températures menant à une perte de molécules odorantes volatiles et à la dénaturation des extraits.

Toutefois, ces composés sont nuisibles à la couche d'ozone, en étant particulièrement volatils. De plus, en tant qu'organo fluorés, ils sont à éviter comme solvant.

On connaît enfin le document US5942597 qui divulgue un procédé d'extraction de polyhydroxyalcanoates et d'une huile (à éliminer) à partir de matières premières telles que des plantes, et mentionne le carbonate de diméthyle parmi une longue liste de solvants des polyhydroxyalcanoates.

Toutefois, le solvant selon l'invention n'est pas mentionné parmi la liste comme solvant de l'huile à éliminer. De plus, les polyhydroxyalcanoates, au même titre que l'huile communément composée de triglycérides, extraits par ce procédé sont des composés non odorants, non volatils, de poids moléculaire élevé, supérieur à 500 g/mol, et ne peuvent être considérés comme des composés odorants volatils.

On connaît également le document CN102002430 qui divulgue un procédé d'extraction d'huiles végétales avec du carbonate de diméthyle.

Les propositions de solvants de substitution concernent le plus souvent des solvants verts non volatils tels les corps gras, triglycérides ou esters, le carbonate de glycérol, des monoterpènes (limonène, pinènes) qui présentent des points d'ébullition trop élevés, ou encore des molécules qui s'avèrent trop polaires (éthanol, butanol, alcool isoamylique, fusels).

Considérant ce qui précède, un problème que se propose de résoudre l'invention est de mettre en œuvre un procédé d'extraction d'un extrait odorant à partir d'une matière première organique par un solvant alternatif non toxique et non issu de la pétrochimie, et qui puisse être mis en œuvre dans des installations traditionnelles d'extraction. Un tel procédé est simple à mettre en œuvre, présente des rendements au moins identiques et généralement très améliorés, et les extraits odorants ainsi obtenus possèdent une odeur fidèle à celle de la matière première, et peuvent être utilisables comme parfum, ingrédient de parfumerie, arôme alimentaire ou encore dans la composition d'un produit cosmétique.

Le procédé selon l'invention offre notamment les avantages suivants par rapport à l'art antérieur :
- le procédé utilise un solvant non toxique, potentiellement non issu de la pétrochimie ;
- le procédé utilise un solvant présentant une volatilité suffisante ;
- le procédé utilise un solvant possédant une polarité modérée ;
- le procédé utilise un solvant possédant une bonne affinité avec les molécules recherchées, d'intérêt organoleptiques ;
- le procédé utilise un solvant qui se présente en phase liquide à pression atmosphérique, dans les conditions classiques d'extraction, et est ainsi adapté aux installations d'extraction traditionnelles ;
- le procédé utilise un solvant qui présente un pouvoir solvant très supérieur à celui de l'hexane vis à vis des molécules volatiles d'intérêt (arômes, parfums) et de ce fait les températures et durées d'extraction peuvent être limitées. Ceci est un avantage économique et écologique ;
- le procédé donne des rendements améliorés par rapport à ceux obtenus pour les concrètes et absolues selon les procédés traditionnels, tout en restant suffisamment sélectif des molécules odorantes volatiles d'intérêt ;
- les extraits odorants obtenus possèdent une odeur sensiblement similaire à celle du végétal, et sont utilisables en parfumerie, cosmétique et agro-alimentaire.

L'invention a donc pour premier objet un procédé d'extraction d'un extrait de composés odorants volatils à partir d'une matière première organique contenant des composés odorants comprenant les étapes selon lesquelles : a) on met en contact dans au moins un bain, à une température comprise entre 10 et 70°C, ladite matière première organique avec du carbonate de diméthyle utilisé comme solvant dans ledit bain de manière à charger ledit solvant carbonate de diméthyle en composés odorants volatils de ladite matière organique et obtenir une phase organique liquide ; b) on recueille la phase organique liquide dudit bain ; c) dans le cas où la phase organique liquide recueillie comporte une phase aqueuse non miscible au carbonate de diméthyle résultante de la matière organique, on décante la phase organique liquide de manière à séparer le carbonate de diméthyle chargé en composés odorants volatils de ladite phase aqueuse non miscible et on élimine la phase aqueuse ; d) on élimine partiellement le carbonate de diméthyle par évaporation et on récupère un extrait pré-concentré de composés odorants volatils ; e) dans le cas où, après élimination partielle du carbonate de diméthyle par évaporation, l'extrait pré-concentré de composés odorants volatils comprend de l'eau, on décante l'extrait pré-concentré de manière à éliminer l'eau ; et f) on concentre l'extrait pré-concentré de composés odorants volatils par évaporation pour obtenir l'extrait de composés odorants volatils.

L'invention et les avantages qui en découlent seront mieux compris à la lecture de la description et des modes de réalisation non limitatifs qui suivent.

Le procédé d'extraction selon l'invention est mis en œuvre pour l'obtention d'un extrait odorant à partir d'une matière première organique contenant des composés odorants. L'extrait odorant selon l'invention est plus particulièrement un extrait de composés odorants volatils, préférentiellement un extrait de composés odorants volatils présentant un poids moléculaire inférieur à 350 g/mol.

Avantageusement, les composés odorants volatils extraits selon l'invention présentent, en plus d'un poids moléculaire faible, inférieur à 350 g/mol, une polarité également faible, une certaine solubilité dans l'eau, une pression de vapeur et un caractère lipophile élevé. De plus, la présence de certains groupes fonctionnels confère aux molécules une odeur spécifique caractéristique.

Un extrait de composés odorants volatils selon l'invention est un extrait qui exhale une odeur.

Par odeur selon l'invention, on entend tout composé chimique volatil, de poids moléculaire faible préférentiellement inférieur à 350 g/mol, présentant des propriétés organoleptiques perceptibles par les cellules olfactives et/ou l'organe gustatif en concentration suffisante, même à une très faible concentration.

A titre non limitatif d'odeur, on peut citer toute odeur indifférente voire même une odeur mauvaise, et plus particulièrement les odeurs odoriférantes qui caractérisent une bonne odeur telles qu'un parfum, un arôme, une saveur ou encore une fragrance qui caractérise des odeurs successives, des strates olfactives.

Par matière première organique contenant des composés odorants, on entend toute matière à partir de laquelle il est possible d'obtenir un extrait odorant par extraction. On entend plus particulièrement par matière première organique une matière première végétale ou encore une matière telle que la cire d'abeille. Préférentiellement, on utilise une matière première végétale.

Les végétaux sont des organismes photosynthétiques dont la paroi est faite de cellulose. Parmi les végétaux, on trouve notamment les algues ainsi que tous types de plantes terrestres telles que les mousses, fougères, plantes à fleurs, arbres, arbustes ou herbes.

Dans le cadre du procédé selon l'invention, on utilise comme matière première végétale, le végétal dans son entièreté ou plus particulièrement certaines parties telles que l'écorce, les feuilles, les fleurs, la tige, les racines, les fruits, les graines, les rhizomes, les bourgeons, ainsi que les exsudats, gommes, sèves, cires et dérivés.

Selon l'invention, on utilise la matière première végétale humide ou fraichement cueillie ou séchée, moulue ou encore broyée, préférentiellement semi humide ou sèche (bourgeons, graines, gousses).

A titre d'exemple non limitatif de matières premières organiques contenant des composés odorants selon l'invention, on peut citer les bourgeons de cassis, le mimosa, la vanille, le maté, l'encens, la tubéreuse, le vétiver, le jasmin, la rose, la myrrhe, l'iris, le benjoin, le cacao, le café, le ciste, le labdanum, le fénugrec, le foin, le santal, le genièvre, le gingembre, la lavande, le lavandin, les mousses, la muscade, l'ylang ylang, le patchouli, les poivres, le safran, le tabac, le thé, la tonka, le géranium, la cardamome, ainsi que la cire d'abeille.

Dans une première étape du procédé selon l'invention, on met en contact dans au moins un bain, à une température comprise entre 10 et 70°C, la matière première organique avec du carbonate de diméthyle utilisé comme solvant de manière à charger le solvant carbonate de diméthyle en composés odorants volatils résultants de la matière organique et obtenir une phase organique liquide.

Le carbonate de diméthyle présente une dangerosité faible et n'est pas considéré comme toxique au regard notamment des solvants pétroliers tels que le benzène, l'hexane ou le cyclohexane.

De plus, le carbonate de diméthyle peut être obtenu à partir de sources non pétrolières. Le carbonate de diméthyle est une substance non toxique et sans conséquence sur l'environnement. Il agit comme solvant tout en minimisant les risques de toxicité.

Le carbonate de diméthyle présente une polarité modérée proche de celle du benzène, et s'avère moins apolaire que l'hexane. Avantageusement, le carbonate de diméthyle n'extrait pas les sucres et autres molécules très polaires, et possède une excellente affinité avec les molécules odorantes volatiles souhaitées.

Lors de la mise en contact selon l'invention, la matière première organique est placée, par exemple dans un extracteur comprenant le carbonate de diméthyle utilisé comme solvant, liquide à pression atmosphérique, de sorte à baigner dans le solvant à une température modérée comprise entre 10 et 70°C, la température dépendant de la charge à traiter et variant selon la nature du végétal à extraire.

Avantageusement, un traitement de chauffage modéré est opéré par rapport aux conditions ambiantes de température, préférentiellement à une température comprise entre 35 et 45°C.

La durée du bain d'extraction selon l'invention peut aller jusqu'à plusieurs heures, par exemple de 15 minutes à 10 heures et aura une influence sur le profil olfactif de l'extrait odorant extrait.

Avantageusement, la durée et la température du bain d'extraction selon l'invention sont optimisées selon la nature de la charge, la durée étant préférentiellement comprise entre environ 1 heure et environ 4 heures, temps nécessaire et suffisant pour extraire les composés odorants volatils recueillis dans la phase organique liquide et plus particulièrement le carbonate de diméthyle chargé en composés odorants volatils.

Lors du bain, la matière première organique peut être travaillée en statique, dynamique ou sous agitation, ou encore en circulation de solvant, durant un temps donné, par exemple délicatement brassée. Le brassage apporte ainsi du solvant moins saturé qui participe à son tour à l'extraction.

Avantageusement, le bain est réalisé en circulation de solvant en circuit fermé, c'est-à-dire que l'on fait circuler le solvant sur la matière première organique de manière à créer un mouvement dans l'extracteur, sans briser par exemple les pétales, ou en agitant les graines broyées, et éviter les zones de saturation du solvant en périphérie du végétal.

De façon alternative, on peut réaliser des bains dans plusieurs extracteurs concomitants ou successivement, suivant la quantité de matière première organique à traiter.

On peut faire par exemple un seul bain puis un rinçage au carbonate de diméthyle d'extraction neuf, plusieurs bains avec la même matière première organique, éventuellement plusieurs passages de la charge sur un même volume de solvant, ceci dépendant de la saturation du solvant pour un ratio en poids/poids matière première / solvant de 1:1 à 1:10, préférentiellement de 1:3 à 1:5.

On recueille ensuite la phase organique liquide du bain. A cet effet, on sépare la phase organique liquide de la matière première organique solide, le cas échéant, afin de recueillir la phase organique liquide et plus particulièrement le carbonate de diméthyle chargé en composés odorants volatils, généralement par soutirage du miscella, comme l'appareillage standard d'extraction le permet.

Ensuite, dans le cas où la phase organique liquide recueillie comporte une phase aqueuse non miscible au carbonate de diméthyle résultante de la matière première organique, on décante la phase organique liquide de manière à séparer le carbonate de diméthyle chargé en composés odorants volatils de la phase aqueuse non miscible résultante de la matière première organique et on élimine la phase aqueuse.

Avantageusement, le carbonate de diméthyle est plus lourd que l'eau avec une masse volumique de 1,060 g/cm³ à 20°C et est peu soluble à l'eau avec une solubilité partielle de 139 g/L. Ainsi, lors de la décantation de la phase organique liquide du bain, le carbonate de diméthyle chargé en composés odorants volatils se sépare distinctement de la phase aqueuse non miscible résultante de la matière première organique. Il est donc très facile de recueillir le solvant chargé en composés odorants volatils et d'éliminer la phase aqueuse lors de la décantation du bain.

Selon un mode de réalisation du procédé d'extraction selon l'invention, considérant la densité du carbonate de diméthyle, l'eau décante par le haut, et le solvant chargé en composés odorants volatils se trouve en dessous de la phase aqueuse à éliminer.

Au plan de la manipulation, le fait que de l'eau recouvre le solvant, permet de limiter d'éventuelles émanations vis à vis des manipulateurs. Les manipulateurs qui seraient amenés à entrer en contact avec le solvant volatil peuvent ainsi utiliser de l'eau pour former une couche de protection en surface, puis l'éliminer par la suite.

On récupère ensuite uniquement la fraction correspondant au solvant carbonate de diméthyle chargé en composés odorants volatils et on élimine la fraction aqueuse.

En effet, lorsqu'on utilise plus particulièrement comme matière première organique un végétal humide ou frais, au contraire d'un végétal séché ou semi humide, qui comprend au moins 70% d'eau en poids de son poids total, classiquement environ 85% d'eau, avant ou après perte à la dessication liée à la cueillette par exemple, on obtient une phase aqueuse résultante. Cette phase aqueuse a tendance à entrainer des sucres non souhaités dans l'extrait odorant selon l'invention. Les sucres ne sont pas extraits par le carbonate de diméthyle pur mais par le carbonate de diméthyle humide, ce qui est le cas avec une charge très humide (fleurs fraiches) ou mouillée (pluie). Un lavage aqueux supplémentaire, limité en volume, peut être envisagé le cas échéant pour éliminer les molécules polaires non recherchées selon l'invention, comme un extrait parfumant concentré.

Avantageusement, afin d'éliminer le peu d'eau susceptible d'avoir été retenue dans le solvant carbonate de diméthyle chargé en composés odorants volatils, on fait agir un déshydratant comme le sulfate de sodium ou le chlorure de sodium. Cela consiste en une opération de séchage. On filtre ensuite pour ne recueillir que le diméthyle carbonate chargé en composés odorants volatils exempt d'eau et avantageusement exempt de sucres.

Ensuite, on élimine partiellement le carbonate de diméthyle par évaporation et on récupère un extrait pré-concentré odorant constitué de composés odorants volatils.

Dans le cas où, après élimination partielle du carbonate de diméthyle par évaporation, l'extrait pré-concentré odorant comprend encore de l'eau, on décante alors l'extrait pré-concentré de manière à éliminer l'eau.

En effet, le carbonate de diméthyle entraine naturellement 3% d'eau résiduelle et est ainsi pré-concentré pour éliminer les dernières traces d'eau par une nouvelle décantation.

Enfin, on concentre l'extrait pré-concentré odorant et plus particulièrement le carbonate de diméthyle chargé en composés odorants volatils par évaporation pour obtenir l'extrait odorant constitué de composés odorants volatils, « concrète » ou « résinoide ».

Avantageusement, le procédé d'extraction selon l'invention permet d'obtenir un extrait comprenant au moins 3% de composés odorants volatils en poids du poids total de l'extrait, encore plus avantageusement au moins 10%.

Dans le cas où on utilise une matière première organique particulièrement sèche et ne comportant pas ou peu d'eau, on ne réalise avantageusement aucune étape voire une seule étape de décantation et d'élimination de l'eau. Aussi, on ne réalise avantageusement aucune étape d'élimination partielle du carbonate de diméthyle par évaporation pour obtenir un extrait pré-concentré odorant ; on concentre uniquement et directement la phase organique recueillie du bain par évaporation pour obtenir l'extrait odorant selon l'invention.

Le carbonate de diméthyle présente une volatilité suffisante pour une bonne élimination du solvant sans dénaturation des composés odorants volatils d'intérêt et de l'extrait odorant. Il possède un point d'ébullition de 90°C à pression atmosphérique (Pa).

Ainsi, on élimine au moins partiellement le carbonate de diméthyle et/ou on concentre l'extrait pré-concentré odorant par évaporation à une température inférieure ou égale à 90°C.

Avantageusement, on réalise une évaporation sous vide ou sous vide partiel permettant d'abaisser sensiblement la température d'évaporation.

Préférentiellement, on évapore au moins partiellement le carbonate de diméthyle sous vide à une température inférieure à 70°C, encore plus préférentiellement à une température inférieure à 60°C voire de 50°C ou même 45°C.

Encore plus avantageusement, le procédé selon l'invention comprend en outre une étape selon laquelle on ajoute au carbonate de diméthyle un alcool formant un azéotrope avec le carbonate de diméthyle, avant d'éliminer le carbonate de diméthyle et/ou de concentrer l'extrait pré-concentré odorant par évaporation par entrainement azéotropique en limitant les pertes aromatiques.

Préférentiellement, on ajoute un composé naturel et non toxique formant un mélange azéotropique avec le carbonate de diméthyle tel que l'éthanol.

Le carbonate de diméthyle forme avantageusement des mélanges azéotropes avec l'eau et avec l'éthanol. Ces mélanges présentent des températures d'ébullition respectivement de 78,4°C et 75,3°C à pression atmosphérique. Ainsi, on abaisse sensiblement la température d'ébullition de sorte à éliminer le solvant par évaporation pour obtenir l'extrait odorant selon l'invention sans dénaturer les composés odorants volatils d'intérêt.

A titre d'exemple, selon un mode de réalisation préféré du procédé d'extraction selon l'invention, avant la finition complète, on peut ajouter une quantité comprise entre 1% et 100% d'éthanol sur la charge en concentration (éthanol préférentiellement au méthanol qui est toxique mais qui pourrait avantageusement être utilisé sur un plan technique avec son azéotrope à 63,7°C dans le carbonate de diméthyle chargé en composés odorants volatils).

Préférentiellement, on évapore les mélanges azéotropes par concentration sous vide ou sous vide partiel. La formation d'un tel mélange azéotropique combinée à une atmosphère sous vide ou sous vide partiel permet d'abaisser la température d'évaporation du carbonate de diméthyle à une température modérée inférieure ou égale à 60°C, de l'ordre de 55, 50, 45 voire 40°C.

On abaisse ainsi avantageusement la température et la durée du chauffage pour évaporer le solvant carbonate de diméthyle et obtenir l'extrait odorant selon l'invention.

Selon le procédé selon l'invention, on récupère un extrait odorant, constitué de composés odorants volatils, moins gras que les concrètes obtenues traditionnellement, dont l'odeur est sensiblement fidèle à l'odeur native de la matière première organique extraite.

Un tel extrait odorant selon l'invention est un produit éventuellement coloré, débarrassé en grande partie des sucres, exempt d'eau, riche en composés odorants volatils et présentant d'excellents rendements en absolue. L'absolue est la fraction soluble à l'éthanol 96 V/V. Selon l'état de l'art, elle est obtenue par reprise de la concrète (extrait primaire) par de l'éthanol, glaçage, filtration et/ou décantation, filtration puis concentration sous vide ou vide partiel.

A titre d'illustration, il est mentionné ci-après quelques exemples de matières premières organiques contenant des composés odorants volatils extraites selon le procédé selon l'invention :

### Bourgeons de cassis :

5kg de bourgeons de cassis (*Ribes nigrum*) ont été cueillis en Bourgogne au mois de janvier 2011 puis expédiés et extraits 48 heures après leur récolte. Ces bourgeons ont été placés dans un extracteur à panier, puis immergés dans un bain de carbonate de diméthyle à 35°C pendant 2 heures, le ratio bourgeons / carbonate de diméthyle étant de 1:3 en poids. Le miscella (solvant + extrait + eau) ou phase organique liquide est soutiré. Les bourgeons sont extraits par deux fois par la même quantité de solvant, le dernier bain étant écourté à une heure. Le miscella est décanté pendant 5 min de manière à séparer le carbonate de diméthyle chargé en composés odorants volatils de la phase aqueuse non miscible résultante des bourgeons de cassis. Le carbonate de diméthyle chargé en composés odorants volatils se retrouve en dessous de la phase aqueuse. On récupère par décantation le carbonate de diméthyle chargé en composés odorants volatils. Ensuite, on filtre le carbonate de diméthyle chargé en composés odorants volatils exempt d'eau. Puis, on concentre sous vide partiel à 60°C. Sur le produit pré-concentré, on ajoute un demi-volume d'éthanol et on chauffe le mélange azéotropique à une température de 45°C de sorte à évaporer complètement le carbonate de diméthyle et l'éthanol. On récupère enfin l'extrait odorant ainsi obtenu selon l'invention.

Le rendement obtenu est de 7% massique pour l'ensemble des trois bains. L'extrait obtenu est une masse pâteuse de couleur vert brun foncé et d'odeur fruitée caractéristique des bourgeons de cassis frais.

Aussi, le tableau 1 ci-dessous met en évidence par chromatographie en phase gazeuse (GC) sur colonne apolaire la composition au moins partielle en composés odorants volatils (calculée en % par rapport à l'ensemble des composés volatils du chromatogramme) de l'extrait de bourgeons de cassis selon l'exemple.

**Tableau 1 :**

| Constituants | Indice de Rétention | Extrait de bourgeons de cassis selon l'invention %GC |
|---|---|---|
| alpha thuyène | 925 | 0,19 |
| sabinene | 963 | 0,19 |
| myrcene | 978 | 0,33 |
| delta3carene | 1006 | 2,80 |
| beta phellandrene | 1027 | 1,65 |
| cis β ocimène | 1029 | 1,26 |
| trans β ocimène | 1040 | 0,84 |
| gamma terpinene | 1050 | 0,42 |
| trans sabinene hydrate | 1051 | 0,08 |
| terpinolene | 1079 | 6,24 |
| para-cymen-8-ol | 1154 | 0,81 |
| butyrate cis-3-hexenyle | 1171 | 2,04 |
| α terpineol | 1176 | 0,18 |
| eucarvone* | 1223 | 0,18 |
| citronellol | 1211 | 0,37 |
| acétate linalyle | 1243 | 0,12 |
| acetate bornyle | 1273 | 0,71 |
| Thymol ou carvacrol? | 1284 ou 1290 | 0,12 |
| acetate alpha terpenyle | 1333 | 0,36 |
| alpha copaene | 1378 | 0,29 |
| hydroxycarvotanacétone [7712-46-1] | - | 0,08 |
| alcool p hydroxyphenylethyl [501-94-0] | - | 0,18 |
| β caryophyllène | 1413 | 11,97 |
| aromadendrène | 1440 | 1,57 |
| α humulène | 1448 | 4,08 |
| alloaromadendrène | 1433 | 1,51 |
| γ muurolène | 1469 | 0,70 |
| β sélinène | 1492 | 0,44 |
| alpha selinene | 1483 | 1,37 |
| γ cadinène | 1511 | 0,51 |
| δ cadinène | 1516 | 0,91 |
| gamma selinene | 1512 | 0,59 |
| selinadiene3,7(11) | 1523 | 0,53 |
| spathulenol | 1565 | 3,10 |
| oxyde de caryo | 1573 | |
| globulol | 1559 | 0,22 |
| humulène epoxyde | 1585 | 0,57 |
| isospathulenol | 1597 | 0,44 |
| 6,10,14-trimethylpentadecan-2-one | 1830 | 0,46 |
| acide palmitique (MM=256) | 1954 | 0,15 |
| acide hardwickiique (MM=316) | - | nq |
| 4',5-dihydroxy-7-methoxyflavanone [520-29-6] (MM=286) | - | 1,92 |

| | | |
|---|---|---|
| *: tentative d'identification; nq: non quantifié. | | |

### Gousses de vanille :

5kg de gousses de vanille broyées (*vanilla planifolia*) sont placés dans un extracteur agité, puis immergés dans un bain de carbonate de diméthyle à 45°C pendant 2 heures, le ratio gousses / carbonate de diméthyle étant de 1:5 en poids. Le miscella (solvant + extrait + eau) est soutiré. Les gousses sont extraites par deux fois par la même quantité de solvant, le dernier bain étant écourté à une heure. Le miscella est décanté pendant 5 min de manière à séparer le carbonate de diméthyle chargé en composés odorants volatils de la phase aqueuse non miscible résultante des gousses de vanille. Le carbonate de diméthyle chargé en composés odorants volatils se retrouve en dessous de la phase aqueuse. On récupère par décantation le carbonate de diméthyle chargé en composés odorants volatils. Ensuite, on filtre le carbonate de diméthyle chargé en composés odorants volatils exempt d'eau. Puis, on concentre sous vide partiel à 55°C. Sur le produit pré-concentré, on ajoute un demi-volume d'éthanol et on chauffe le mélange azéotropique à une température de 45°C de sorte à évaporer complètement le carbonate de diméthyle et l'éthanol. On récupère enfin l'extrait odorant ainsi obtenu selon l'invention.

Le rendement obtenu est de 15% massique pour l'ensemble des trois bains. L'extrait obtenu est un liquide épais brun ambré à odeur douce, boisée, douce (vanilline), caractéristique des gousses de vanille.

Aussi, le tableau 2 ci-dessous met en évidence par chromatographie en phase gazeuse (GC) sur colonne polaire la composition au moins partielle en composés odorants volatils (calculée en % par rapport à l'ensemble des composés volatils du chromatogramme) de l'extrait de vanille selon l'exemple.

**Tableau 2 :**

| Constituants | Indice de rétention | Extrait de Vanille selon l'invention %GC |
|---|---|---|
| lactate ethyle | 1359 | 2,22 |
| butanediol | 1547 | 0,22 |
| succinate diethyle | 1689 | trace |
| trans-2-decenal | 1819 | |
| guaïacol | 1866 | 2,18 |
| phenol | 1942 | 0,46 |
| myristate ethyle | 2008 | trace |
| cinnamate ethyle | 2054 | trace |
| para vinyl guaiacol | 2113 | trace |
| anisic alcohol | 2200 | trace |
| palmitate ethyle | 2216 | 2,00 |
| alcool homovanillique | 2286 | 0,57 |
| alcane c23 | 2300 | 0,44 |
| alcane c24 | 2400 | trace |
| stearate ethyle | 2460 | 0,54 |
| oleate ethyle + 4-ethoxymethyl phénol | 2474 | 1,73 |
| Vanilline (MM=152) | 2505 | 43,57 |
| linoleate ethyle (MM=308) | 2477 | 10,13 |
| linolenate ethyle (MM=306) | 2519 | 0,49 |
| para hydroxybenzaldehyde (MM=122) | 2958 | 3,18 |

### Rameaux fleuris de mimosa :

3kg de rameaux fleuris frais de mimosa (*Acacia dealbata*) ont été cueillis dans le massif du Tanneron en France (Alpes Maritimes) au mois de février 2011 puis sont extraits dans les 12 heures après leur récolte. Ces rameaux entiers ont été placés dans un extracteur à panier, puis immergés dans un bain de carbonate de diméthyle à 35°C pendant 2 heures, le ratio rameaux / carbonate de diméthyle étant de 1:5 en poids. Le miscella (solvant + extrait + eau) est soutiré. Les rameaux sont extraits par deux fois par la même quantité de solvant, le dernier bain étant écourté à une heure. Le miscella est décanté pendant 5 min de manière à séparer le carbonate de diméthyle chargé en composés odorants volatils de la phase aqueuse non miscible résultante des rameaux de mimosa. Le carbonate de diméthyle chargé en composés odorants volatils se retrouve en dessous de la phase aqueuse. On récupère par décantation le carbonate de diméthyle chargé en composés odorants volatils. Ensuite, on filtre le carbonate de diméthyle chargé en composés odorants volatils exempt d'eau. Puis, on concentre sous vide partiel à 45°C. Sur le produit pré-concentré, on ajoute un demi-volume d'éthanol et on chauffe le mélange azéotropique à une température de 40°C de sorte à évaporer complètement le carbonate de diméthyle et l'éthanol. On récupère enfin l'extrait odorant ainsi obtenu selon l'invention.

Le rendement en extrait est de 1,25% sur le végétal frais.

L'extrait obtenu est une pâte vert foncé possédant une odeur douce, anisée, caractéristique des fleurs fraiches de mimosa. On note l'absence des notes grasses présente dans la concrète hexanique.

Aussi, le tableau 3 ci-dessous met en évidence par chromatographie en phase gazeuse (GC) sur colonne apolaire la composition au moins partielle en composés odorants volatils (calculée en % par rapport à l'ensemble des composés volatils du chromatogramme) de l'extrait de mimosa selon l'exemple.

**Tableau 3 :**

| Constituants | Indice de Rétention | Extrait de mimosa selon l'invention %GC |
|---|---|---|
| Acide hexanoïque | 980 | trace |
| Hexanoate éthyle | 976 | trace |
| Alcool benzylique | 1010 | 0,82 |
| Acide heptanoïque | 1069 | trace |
| Maltol | 1088 | 0,21 |
| Alcool phényléthylique | 1096 | 0,27 |
| Benzoate éthyle | 1146 | trace |
| Heptanal diéthyl acétal | 1177 | trace |
| Acide benzoïque | 1152 | 7,99 |
| 2,3-dihydrobenzofurane | 1194 | 8,73 |
| Anisaldehyde | 1224 | trace |
| Alcool anisique | 1267 | 0,26 |
| Résorcinol [108-46-3]* | - | 1,44 |
| Nonanoate éthyle | 1288 | trace |
| 2-méthoxy-4-vinylphénol [7786-61-0] ou p-méthoxyacétophénone [100-06-1]* | - | 0,83 |
| Anisate méthyle | 1337 | trace |
| Nonanal diéthyl acétal | 1371 | trace |
| Acide p-anisique | 1393 | 17,84 |
| Décanal diéthyl acétal | 1467 | 0,73 |
| Alcane C15 | 1500 | 0,18 |
| Levoglucosan (patatoïde) | - | 12,17 |
| Alcène C16 | 1590 | 0,13 |
| Alcane C16 | 1600 | trace |
| Heptadecadiène* | 1671 | trace |
| Heptadec-8-ène | 1684 | 9,11 |
| Alcane C17 | 1700 | 1,50 |
| Benzoate benzyle | 1726 | trace |
| Acide myristique | 1748 | trace |
| Myristate éthyle | 1776 | trace |
| Alcane C18 | 1800 | 0,29 |
| 6,10,14 trimethylpentadecan-2-one | 1830 | trace |
| Alcane C19 | 1900 | 10,42 |
| Acide palmitique | 1954 | trace |
| Palmitate éthyle | 1976 | 2,43 |
| alcane C20 | 2000 | 0,60 |
| Alcane C21 | 2100 | 2,91 |
| Linolénate éthyle (MM=306) | 2153 | trace |
| Alcane C23 (MM=324) | 2300 | 1,46 |

| | | |
|---|---|---|
| * = tentative d'identification. | | |

### Gomme d'encens :

5kg de larmes (exsudat) d'encens broyées (*Boswellia sp.*) sont placés dans un extracteur agité, puis immergés dans un bain de carbonate de diméthyle à 45°C pendant 2 heures, le ratio larmes / carbonate de diméthyle étant de 1:3 en poids. Le miscella (solvant + extrait) ou phase organique liquide est soutiré. Les larmes sont extraites par trois fois par la même quantité de solvant, le dernier bain étant écourté à une heure. On récupère par filtration le carbonate de diméthyle chargé en composés odorants volatils et débarrassé des poussières. Puis, on concentre sous vide partiel à 55°C. On récupère enfin l'extrait odorant ainsi obtenu selon l'invention.

Le rendement obtenu est de 67% massique pour l'ensemble des quatre bains. Le produit obtenu est un liquide très visqueux, transparent, de couleur ambrée, possédant une odeur boisée, résineuse, caractéristique des larmes d'encens.

Aussi, le tableau 4 ci-dessous met en évidence par chromatographie en phase gazeuse (GC) sur colonne apolaire la composition au moins partielle en composés odorants volatils (calculée en % par rapport à l'ensemble des composés volatils du chromatogramme) de l'extrait de gomme d'encens selon l'exemple.

**Tableau 4 :**

| Constituants | Indice de Rétention | Extrait de gomme d'encens selon l'invention %GC |
|---|---|---|
| Tricyclène | 920 | 0,05 |
| α Thujène | 924 | 0,07 |
| α Pinène | 932 | 2,28 |
| Camphène | 945 | 0,05 |
| Verbénène | 948 | 0,06 |
| Sabinène | 968 | 0,27 |
| β Pinène | 972 | 0,57 |
| Myrcène | 983 | 0,41 |
| α Phellandrène | 997 | 0,04 |
| p Cymène | 1013 | 0,18 |
| Limonène | 1024 | 0,43 |
| c β Ocimène | 1024 | 0,07 |
| Octanol | 1057 | 0,14 |
| cis p-2,8-menthadièn-1-ol [3886-78-0]* | 1101 | 0,12 |
| α Campholène aldéhyde | 1107 | 0,16 |
| trans pinocarvéol | 1133 | 0,38 |
| cis verbénol* | 1140 | 0,08 |
| cis verbénol | 1140 | 0,96 |
| Myrténal | 1171 | 0,13 |
| Terpinénol-4 | 1164 | 0,05 |
| α Terpinéol | 1174 | 0,52 |
| Verbénone | 1181 | 0,25 |
| Myrténol | 1183 | |
| Acétate octyle | 1187 | 0,76 |
| t Carvéol | 1200 | 0,13 |
| Decyl méthyl ether | 1227 | 0,16 |
| Acétate bornyle | 1272 | 0,16 |
| α Copaène | 1373 | 0,12 |
| β Bourbonène | 1381 | 0,16 |
| β Caryophyllène | 1413 | 0,13 |
| Guaiadiène-6,9 | - | 0,19 |
| α Gurjunène | 1410 | 0,05 |
| α Humulène | 1448 | 0,06 |
| allo Aromadendrène | 1460 | 0,05 |
| γ muurolène | 1473 | 0,07 |
| β sélinène | 1478 | 0,07 |
| γ Cadinène | 1511 | 0,26 |
| δ Cadinène | 1516 | 0,09 |
| α Elémol | 1533 | 0,08 |
| Oxyde caryophyllène | 1568 | 0,28 |
| Viridiflorol | 1582 | 0,52 |
| Humulène epoxyde | 1593 | 0,14 |
| épi Cubénol | 1619 | 0,07 |
| τ muurolol | 1628 | 0,38 |
| α muurolol | 1637 | 0,11 |
| α eudesmol | 1652 | 0,13 |
| Abs Encens pic A? | - | 0,21 |
| Cembrène* | 1932 | 0,35 |
| Verticiol [70000-19-0]* | - | 0,17 |
| Cembrénol (MM=290) | - | 1,26 |
| Incensol (MM=306) | 2152 | 4,57 |

| | | |
|---|---|---|
| *: tentative d'identification. | | |

### Feuilles de maté :

3kg de feuilles de maté en forme de brisures (*Ilex paraguariensis, Paraguay)* sont placés dans un extracteur agité, puis immergés dans un bain de carbonate de diméthyle à 45°C pendant 2 heures, le ratio brisures / carbonate de diméthyle étant de 1:5 en poids. Le miscella (solvant + extrait) est soutiré. La charge est extraite par deux fois par la même quantité de solvant, le dernier bain étant écourté à une heure. On récupère par filtration le carbonate de diméthyle chargé en composés odorants volatils et débarrassé des poussières. Puis, on concentre sous vide partiel à 50°C. On récupère enfin l'extrait odorant ainsi obtenu selon l'invention.

Le rendement obtenu est de 9% massique pour l'ensemble des bains. L'extrait est une pâte vert gris à odeur caractéristique des feuilles de maté, qui est proche de celle du thé vert ou du foin.

Aussi, le tableau 5 ci-dessous met en évidence par chromatographie en phase gazeuse (GC) sur colonne apolaire la composition au moins partielle en composés odorants volatils (calculée en % par rapport à l'ensemble des composés volatils du chromatogramme) de l'extrait de maté selon l'exemple.

**Tableau 5 :**

| Constituants | Indice de Rétention | Extrait de feuilles de maté selon l'invention %GC |
|---|---|---|
| Acide hexanoïque | 980 | 0,31 |
| Methyléthylmaleimide [20189-42-8] | 1265 | 0,59 |
| p-hydroxybenzaldéhyde | 1310 | trace |
| vanilline | 1348 | trace |
| α-ionone | 1424 | 0,12 |
| β-caryophyllène | 1413 | trace |
| Nerylacétone | 1431 | trace |
| β-ionone epoxide | 1459 | trace |
| β-ionone | 1476 | trace |
| Dihydroactinidolide [15356-74-8] (dérivé benzofuranone) | 1479 | 0,68 |
| t propenyltrimethylpyrazine | - | trace |
| 3,5-dimethoxy-4-hydroxybenzaldéhyde (syringaldehyde) [134-96-3] | 1652 | 0,13 |
| 3-oxo-β-ionone | 1659 | trace |
| 4-hydroxy-3,5,6-trimethyl-4-(3-oxo-1-butenyl)-2-cyclohexen-1-one [77846-84-5] | - | 0,13 |
| Benzoate benzyle | 1726 | trace |
| Phenanthrene | 1742 | trace |
| Acide myristique | 1748 | trace |
| Caféine | 1810 | 58,86 |
| Théobromine | 1910? | 0,33 |
| Acide palmitique | 1954 | 1,89 |
| Phytol | 2105 | 0,44 |
| Acide stéarique* | 2200 | trace |
| 4,8,12,16-tetramethylheptadecan-4-olide* (MM=324) | - | 0,59 |
| Alcane C24 (MM=338) | 2400 | 0,15 |

| | | |
|---|---|---|
| *: tentative d'identification. | | |

### Rose de mai :

2kg de roses fraiches (*Rosa centifolia, France*) sont placés dans un extracteur, puis immergés dans un bain de carbonate de diméthyle à 25°C pendant 2 heures, le ratio fleurs / carbonate de diméthyle étant de 1:3 en poids. Le miscella (solvant + extrait) est soutiré. La charge est extraite par deux fois par la même quantité de solvant. On récupère par filtration et séchage sur un sel desséchant comme le sulfate de soude les lavages au carbonate de diméthyle chargés en composés odorants volatils et débarrassés des débris végétaux. La concentration est réalisée sous vide de 150 à 200 mbar, à une température de 50°C, avec addition d'éthanol en fin de concentration. On récupère enfin l'extrait odorant ainsi obtenu selon l'invention.

Le rendement obtenu est de 0,63% massique pour l'ensemble des bains. Cet extrait est une masse pâteuse rouge foncée à odeur de pétale de rose. Il peut être déciré de manière traditionnelle à l'éthanol (lavages, glaçage, filtration, concentration) de manière à obtenir une absolue de rose. Le rendement en absolue sur l'extrait est de 79% et sur les fleurs il est de 0,5% (versus 0,3% en traditionnel).

Aussi, le tableau 6 ci-dessous met en évidence par chromatographie en phase gazeuse (GC) sur colonne apolaire la composition au moins partielle en composés odorants volatils (calculée en % par rapport à l'ensemble des composés volatils du chromatogramme) de l'extrait de rose selon l'exemple.

**Tableau 6 :**

| Constituants | Indice de rétention | Extrait de Rose selon l'invention %GC |
|---|---|---|
| Alcool benzylique | 1010 | 1,43 |
| linalol | 1086 | trace |
| Alcool phényléthylique | 1096 | 34,58 |
| Nérol | 1214 | 0,26 |
| citronellol | 1212 | 4,80 |
| Acetate phényléthyle | 1225 | trace |
| acide phenyl acetique | 1248 | trace |
| géraniol | 1238 | 1,19 |
| 1,2-ethanediol,l-phenyle | | 0,13 |
| propionate phenylethyl | 1327 | trace |
| Acétate citronellyle | 1334 | trace |
| Eugénol | 1330 | 0,66 |
| Acétate géranyle | 1363 | trace |
| Acide géranique | 1347 | 0,99 |
| Méthyl Eugénol | 1373 | 0,52 |
| trans Caryophyllène | 1419 | trace |
| Alpha guaïène | 1446 | trace |
| α humulène | 1449 | trace |
| germacrène D | 1476 | trace |
| Alcane C15 (pentadécane) | 1500 | trace |
| Delta guaïène | 1495 | trace |
| Alcane C16 (hexadécane) | 1600 | trace |
| Alcène C17 (heptadecène) | 1695 | trace |
| Alcane C17 (heptadécane) | 1700 | 0,36 |
| trans farnesol | 1716 | 0,14 |
| Alcane C18 (octadécane) | 1800 | trace |
| Alcène C19 (nonadécéne) | 1894 | 1,02 |
| Alcane C19 (nonadécane) | 1900 | 4,20 |
| Alcène C20 (eicosène) | 1994 | 0,14 |
| Alcane C20 (eicosane) | 2000 | 0,55 |
| Alcène C21 (heneicosène) | 2095 | 0,11 |
| Alcane C21 (heneicosane) | 2100 | 3,01 |
| Alcane C22 (docosane) | 2200 | 0,13 |
| alcènes C23 | 2290 | 0,53 |
| Alcane C23 (tricosane) | 2300 | 1,30 |
| Alcane C22 (docosane) | 2200 | 0,13 |
| alcènes C23 (MM=322) | 2290 | 0,53 |
| Alcane C23 (tricosane) (MM=324) | 2300 | 1,30 |

### Cardamome verte :

1,5 kg de graines de cardamome (*Ellettaria cardamomum)* broyées sont placées dans un extracteur agité, puis immergées dans un bain de carbonate de diméthyle à 45°C pendant 2 heures, le ratio graines de cardamone / carbonate de diméthyle étant de 1:6 en poids. Le miscella (solvant + extrait) ou phase organique liquide est soutiré. La charge est extraite par deux fois, la première fois par 6 kg puis par 3 kg de carbonate de diméthyle, pendant une heure pour chaque bain. On récupère par filtration le carbonate de diméthyle chargé en composés odorants volatils. Puis, on sèche et on concentre sous vide de 150 à 200 mbar, à une température de 50°C. On récupère enfin l'extrait odorant ainsi obtenu selon l'invention.

Le rendement obtenu est de 7% massique pour l'ensemble des bains.

Aussi, le tableau 7 ci-dessous met en évidence par chromatographie en phase gazeuse (GC) sur colonnes apolaire et polaire la composition au moins partielle en composés odorants volatils (calculée en % par rapport à l'ensemble des composés volatils du chromatogramme) de l'extrait de cardamone verte selon l'exemple.

**Tableau 7 :**

| Constituants Colonne apolaire | Indice de Rétention | Extrait de Cardamone verte selon l'invention %GC |
|---|---|---|
| α Thujène | 924 | trace |
| α Pinène | 932 | 0,12 |
| Camphène | 945 | trace |
| Sabinène | 967 | 1,6 |
| β Pinène | 971 | 0,12 |
| Myrcène | 983 | 1,12 |
| p Cymène | 1013 | trace |
| 1,8-cineol (eucalyptol)** | 1021 | 1,44 |
| Limonène** | 1024 | 24,08 |
| c β Ocimène | 1024 | trace |
| t β Ocimène | 1036 | 0,04 |
| γ Terpinène | 1050 | 0,06 |
| t Sabinène Hydrate | 1056 | 0,33 |
| octanol-1 | 1055 | 0,12 |
| Terpinolène | 1079 | trace |
| cis sabinene hydrate | 1095 | 0,28 |
| Linalol | 1086 | 0,27 |
| t 4,8-Diméthyl-1,3,7-Nonatriène | 1106 | 0,22 |
| δ Terpinéol | 1150 | 0,11 |
| 2-Octénoate Méthyle * | - | |
| Terpinénol-4 | 1164 | 0,37 |
| trans-4-decenal | 1177 | 0,07 |
| α Terpinéol | 1174 | 0,76 |
| Acétate Octyle | 1187 | 0,1 |
| Acétate cis Sabinène Hydrate | 1214 | 2,23 |
| Néral | 1215 | 0,1 |
| Acétate Linalyle | 1243 | 1,38 |
| Géraniol | 1238 | 0,93 |
| Géranial | 1245 | 0,26 |
| Géraniate Méthyle | - | 0,21 |
| Acétate α Terpinyle | 1332 | 52,03 |
| Acétate Néryle | 1343 | trace |
| Cinnamate Méthyle | 1365 | 0,13 |
| Vanilline | 1379 | trace |
| Acétate Géranyle | 1363 | 0,86 |
| β Elémène | 1386 | 0,15 |
| Propionate Terpinyle | 1405 | 0, 11 |
| Germacrène D | 1476 | 0,1 |
| β Sélinène | 1478 | 1,49 |
| α Sélinène | 1488 | 0,57 |
| γ Cadinène | 1511 | 0,23 |
| t Nérolidol | 1550 | 0,8 |
| t,t-Farnésol | 1716 | 0,05 |
| t,t-Farnésal | 1715 | 0,09 |
| Acétate t,t-Farnésyle | 1814 | 0,04 |
| Alcane C23 (MM=324) | 2300 | 0,09 |

| | | |
|---|---|---|
| * tentative d'identification ** résolu sur colonne polaire | | |

De plus, le tableau 8 ci-dessous met en évidence les teneurs en composés odorants volatils, présentant un poids moléculaire inférieur à 350 g/mol, des extraits odorants extraits selon l'invention à partir des matières premières végétales comme décrit dans les exemples ci-dessus. Ces concentrations en composés odorants volatils sont données en poids du poids total de l'extrait.

**Tableau 8 :**

| **Matière première** | **Teneur en composés odorants volatils en poids du poids total de l'extrait selon l'invention** |
|---|---|
| **Encens** | 14,6% |
| **Maté** | 3,2% |
| **Mimosa** | 10,2% |
| **Bourgeons de cassis** | 9,3% |
| **Cardamome** | 56,8% |
| **Vanille** | 11,1% |
| **Rose** | 17,5% |

Aussi, on compare dans le tableau 9 ci-dessous les rendements des extraits odorants extraits selon l'invention à partir des différentes matières premières végétales comme décrit dans les exemples ci-dessus avec ceux d'une concrète traditionnelle obtenue par extraction à l'hexane.

**Tableau 9 :**

| **Matière Première** | **Concrète hexanique** | **Carbonate de diméthyle (DMC)** |
|---|---|---|
| **Bourgeons de Cassis** | 5,5% ± 0,2 | 7,0% ± 0,2 |
| **Mimosa** | 0,85% ± 0,05 | 1,25% ± 0,05 |
| **Vanille** | 12% ± 0,5 | 15% ± 0,5 |
| **Maté** | 6% ± 0,2 | 9% ± 0,2 |
| **Encens** | 55% ± 1 | 67% ± 1 |

Ainsi, tel qu'illustré ci-dessus, le procédé selon l'invention présente des rendements supérieurs à ceux obtenus avec le procédé d'extraction traditionnel à l'hexane à partir de ces mêmes matières premières végétales.

Le procédé selon l'invention permet ainsi l'obtention d'un extrait odorant extrait d'une matière première organique, préférentiellement végétale, par le carbonate de diméthyle non issu de la pétrochimie, et qui respecte les principes de la chimie verte et qui ne présente pas du tout le même impact sur la santé humaine, en particulier il n'est pas cancérigène, mutagène et reprotoxique.

De tels extraits odorants, comme exemplifiés ci-avant, sont très difficilement caractérisables en tant que tels car ils varient, pour une même espèce, suivant différents facteurs tels que la matière première végétale utilisée, le lieu de récolte, ou encore l'année de récolte, de même que par l'appareillage utilisé pour la fabrication et ses réglages (vide, température, durée).

L'extrait obtenu comprend avantageusement au moins 3% de composés odorants volatils en poids du poids total de l'extrait, encore plus avantageusement au moins 10%.

L'extrait parfumant obtenu peut avantageusement être transformé en absolue selon les procédés de l'état de l'art avec des rendements très supérieurs aux concrètes classiques obtenues par des solvants pétroliers de type hexane, le carbonate de diméthyle étant plus polaire. Le bilan massique de la plante à l'absolue est particulièrement avantageux.

L'extrait obtenu selon l'invention par extraction au carbonate de diméthyle, ou l'absolue qui en découle, peuvent aussi être avantageusement fractionnés par distillation moléculaire pour obtenir un extrait plus clair et plus concentré en molécules parfumées.

L'extrait odorant obtenu peut également être utilisé comme arôme alimentaire ou encore dans la composition d'un produit cosmétique.

A titre d'exemple de composition cosmétique, on peut citer des compositions destinées à une application topique notamment sur la peau tel qu'un gel, une crème, un lait, une lotion, une huile, un shampoing, un savon.

## Revendications

1. Procédé d'extraction d'un extrait de composés odorants volatils présentant chacun un poids moléculaire inférieur à 350 g/mol à partir d'une matière première organique contenant des composés odorants volatils comprenant les étapes selon lesquelles :
a) on met en contact dans au moins un bain, à une température comprise entre 10 et 70°C, ladite matière première organique avec du carbonate de diméthyle utilisé comme solvant dans ledit bain de manière à charger ledit solvant carbonate de diméthyle en composés odorants volatils présentant chacun un poids moléculaire inférieur à 350 g/mol de ladite matière organique et obtenir une phase organique liquide ;
b) on recueille la phase organique liquide dudit bain comprenant le carbonate de diméthyle chargé en composés odorants volatils présentant chacun un poids moléculaire inférieur à 350 g/mol ;
c) dans le cas où la phase organique liquide recueillie comporte une phase aqueuse non miscible au carbonate de diméthyle résultante de la matière organique, on décante la phase organique liquide de manière à séparer le carbonate de diméthyle chargé en composés odorants volatils de ladite phase aqueuse non miscible et on élimine la phase aqueuse ;
d) on élimine partiellement le carbonate de diméthyle par évaporation et on récupère un extrait pré-concentré de composés odorants volatils ;
e) dans le cas où, après élimination partielle du carbonate de diméthyle par évaporation, l'extrait pré-concentré de composés odorants volatils comprend de l'eau, on décante l'extrait pré-concentré de manière à éliminer l'eau ;
f) on ajoute au carbonate de diméthyle un alcool formant un azéotrope avec le carbonate de diméthyle par évaporation par entrainement azéotropique ; et
g) on concentre l'extrait pré-concentré de composés odorants volatils par évaporation du mélange azéotropique pour obtenir l'extrait de composés odorants volatils.

2. Procédé selon la revendication 1, dans lequel la matière première organique contenant des composés odorants volatils est une matière première végétale préférentiellement choisie parmi les bourgeons de cassis, le mimosa, la vanille, le maté, l'encens, la tubéreuse, le vétiver, le jasmin, la rose, la myrrhe, l'iris, le benjoin, le cacao, le café, le ciste, le labdanum, le fénugrec, le foin, le santal, le genièvre, le gingembre, la lavande, le lavandin, les mousses, la muscade, l'ylang ylang, le patchouli, les poivres, le safran, le thé, la tonka, le géranium, la cardamone ou une cire d'abeille.

3. Procédé selon la revendication 1 ou 2, dans lequel le bain est réalisé en circulation de solvant, statique, dynamique, ou sous agitation, pour un ratio final en poids/poids matière première / solvant de 1:1 à 1:10.

4. Procédé selon l'une des revendications précédentes, dans lequel on met en contact la matière première organique avec le carbonate de diméthyle pendant 15 minutes à environ 10 heures.

5. Procédé selon l'une des revendications précédentes, dans lequel on élimine le carbonate de diméthyle et/ou on concentre l'extrait pré-concentré de composés odorants volatils par évaporation à une température inférieure ou égale à 90°C.

6. Procédé selon la revendication 5, dans lequel on réalise une évaporation sous vide ou sous vide partiel.

7. Procédé selon l'une des revendiction 1 à 6, dans lequel on ajoute de l'éthanol au carbonate de diméthyle pour former un azéotrope.

8. Procédé selon l'une des revendications précédente, dans lequel on élimine le carbonate de diméthyle et/ou on concentre l'extrait pré-concentré de composés odorants volatils par évaporation à une température inférieure ou égale à 60°C.

## Patentansprüche

1. Verfahren zur Extraktion eines Extrakts flüchtiger Geruchsstoffverbindungen, die jeweils ein Molekulargewicht von unter 350 g/mol aufweisen, aus einem organischen Rohstoff, der flüchtige Geruchsstoffverbindungen enthält, umfassend die Schritte, gemäß denen:
a) der organische Rohstoff in mindestens einem Bad bei einer Temperatur zwischen 10 und 70 °C mit Dimethylcarbonat in Kontakt versetzt wird, das in dem Bad als Lösungsmittel derart verwendet wird, dass das Lösungsmittel Dimethylcarbonat mit flüchtigen Geruchsstoffverbindungen, die jeweils ein Molekulargewicht von unter 350 g/mol aufweisen, des Rohstoffs beladen wird, und man eine flüssige organische Phase erhält;
b) aus dem Bad die flüssige organische Phase, die das mit flüchtigen Geruchsstoffverbindungen, die jeweils ein Molekulargewicht von unter 350 g/mol aufweisen, beladene Dimethylcarbonat umfassen, gewonnen wird;
c) wenn die gewonnene flüssige organische Phase eine aus dem organischen Material resultierende, mit dem Dimethylcarbonat nicht mischbare wässrige Phase aufweist, Abscheiden der flüssigen organischen Phase derart, dass das mit flüchtigen Geruchsstoffverbindungen beladene Dimethylcarbonat von der nicht mischbaren wässrigen Phase getrennt wird und Entfernen der wässrigen Phase;
d) teilweises Entfernen des Dimethylcarbonats durch Verdampfen und Gewinnen eines vorkonzentrierten Extrakts flüchtiger Geruchsstoffverbindungen;
e) wenn nach dem teilweisen Entfernen des Dimethylcarbonats durch Verdampfen der vorkonzentrierte Extrakt flüchtiger Geruchsstoffverbindungen Wasser umfasst, Abscheiden des vorkonzentrierten Extrakts derart, dass das Wasser entfernt wird;
f) Hinzufügen eines Alkohols zu dem Dimethylcarbonat, der mit dem Dimethylcarbonat durch Verdampfen durch azeotropische Wirkung ein Azeotrop bildet;
g) Konzentrieren des vorkonzentrierten Extrakts flüchtiger Geruchsstoffverbindungen durch Verdampfen des azeotropischen Gemisch um den Extrakt flüchtiger Geruchsstoffverbindungen zu erhalten.

2. Verfahren nach Anspruch 1, wobei der organische Rohstoff, der flüchtige Geruchsstoffverbindungen enthält, ein pflanzlicher Rohstoff ist, der vorzugsweise aus den Knospen von Schwarzer Johannisbeere, Mimose, Vanille, Mate, Weihrauch, Tuberose, Vetiver, Jasmin, Rose, Myrrhe, Iris, Benzoe, Kakao, Kaffee, Zistrose, Labdanum, Bockshornklee, Heu, Sandelholz, Wacholder, Ingwer, Lavendel, Lavandin, den Moosen, Muskat, Ylang-Ylang, Patschuli, den Pfeffern, Safran, Tee, Tonka, Geranium, Kardamon oder einem Bienenwachs ausgewählt ist.

3. Verfahren nach Anspruch 1 oder 2, wobei das Bad bei Lösungsmittelzirkulation, statisch, dynamisch oder unter Rühren für ein endgültiges Verhältnis Gewicht/Rohstoffgewicht/Lösungsmittel von 1:1 bis 1:10 hergestellt wird.

4. Verfahren nach einem der vorangehenden Ansprüche, wobei der organische Rohstoff mit dem Dimethylcarbonat während 15 Minuten bis zirka 10 Stunden in Kontakt versetzt wird.

5. Verfahren nach einem der vorangehenden Ansprüche, wobei das Dimethylcarbonat entfernt wird und/oder der vorkonzentrierte Extrakt flüchtiger Geruchsstoffverbindungen durch Verdampfen bei einer Temperatur von unter oder gleich 90 °C konzentriert wird.

6. Verfahren nach Anspruch 5, wobei eine Verdampfung im Vakuum oder im Teilvakuum durchgeführt wird.

7. Verfahren nach einem der Ansprüche 1 bis 6, wobei dem Dimethylcarbonat Ethanol hinzugefügt wird, um ein Azeotrop zu bilden.

8. Verfahren nach einem der vorangehenden Ansprüche, wobei das Dimethylcarbonat entfernt wird und/oder der vorkonzentrierte Extrakt flüchtiger Geruchsstoffverbindungen durch Verdampfen bei einer Temperatur von unter oder gleich 60 °C konzentriert wird.

## Claims

1. Method for extracting an extract of volatile odorous compounds each having a molecular weight of less than 350 g/mol from an organic raw material containing volatile odorous compounds, comprising the steps according to which:
a) said organic raw material is put in contact, in at least one bath, at a temperature of between 10 and 70°C, with dimethyl carbonate used as a solvent in said bath so as to load said dimethyl carbonate solvent with volatile odorous compounds each having a molecular weight of less than 350 g/mol from said organic material and to obtain a liquid organic phase;
b) the liquid organic phase is collected from said bath comprising the dimethyl carbonate loaded with volatile odorous compounds each having a molecular weight of less than 350 g/mol;
c) in the event that the liquid organic phase collected includes an aqueous phase that is immiscible with the dimethyl carbonate resulting from the organic material, the liquid organic phase is decanted so as to separate the dimethyl carbonate loaded with volatile odorous compounds from said immiscible aqueous phase, and the aqueous phase is eliminated;
d) the dimethyl carbonate is partially eliminated by evaporation and a preconcentrated extract of volatile odorous compounds is recovered;
e) in the event that, after partially eliminating the dimethyl carbonate by evaporation, the preconcentrated extract of volatile odorous compounds comprises water, the preconcentrated extract is decanted so as to eliminate the water;
f) an alcohol is added to the dimethyl carbonate, forming an azeotrope with the dimethyl carbonate by evaporation by azeotropic entrainment;
and
g) the preconcentrated extract of volatile odorous compounds is concentrated by evaporating the azeotropic mixture to obtain the extract of volatile odorous compounds.

2. Method according to claim 1, wherein the organic raw material containing volatile odorous compounds is a plant raw material preferentially selected from blackcurrant buds, mimosa, vanilla, mate, incense, tuberose, vetiver, jasmine, rose, myrrh, iris, benzoin, cocoa, coffee, rockrose, labdanum, fenugreek, hay, sandal, juniper, ginger, lavender, hybrid lavender, mosses, nutmeg, ylang ylang, patchouli, peppers, saffron, tea, tonka bean, geranium, cardamom or a beeswax.

3. Method according to claim 1 or 2, wherein the bath is implemented by circulating solvent, static, dynamic or under stirring, for a final weight/weight ratio of raw material to solvent of 1:1 to 1:10.

4. Method according to one of the preceding claims, wherein the organic raw material is put in contact with the dimethyl carbonate for 15 minutes to approximately 10 hours.

5. Method according to one of the preceding claims, wherein the dimethyl carbonate is eliminated and/or the preconcentrated extract of volatile odorous compounds by evaporating at a temperature of less than or equal to 90°C.

6. Method according to claim 5, wherein an evaporation is implemented under vacuum or under partial vacuum.

7. Method according to one of claims 1 to 6, wherein ethanol is added to the dimethyl carbonate to form an azeotrope.

8. Method according to one of the preceding claims, wherein the dimethyl carbonate is eliminated and/or the preconcentrated extract of volatile odorous compounds is concentrated by evaporating at a temperature of less than or equal to 60°C.
